# EUROPÄISCHE PATENTSCHRIFT

(11) **EP 0 626 148 B1**
(45) Veröffentlichungstag und Bekanntmachung des Hinweises auf die Patenterteilung: **01.10.1997**
(21) Anmeldenummer: 94810285.0
(22) Anmeldetag: 16.05.1994
(51) Int. Cl.: A47J 27/56, A47J 27/00

(54) **Heizbarer Milchbehälter**
Heatable milk vessel
Récipient de lait chauffant

(30) Priorität: 27.05.1993 CH 1585/93
(43) Veröffentlichungstag der Anmeldung: 30.11.1994
(73) Patentinhaber: THERMOPLAN AG, CH-6353 Weggis (CH)
(72) Erfinder: Fricker, Robert, CH-6403 Küssnacht a. Rigi (CH)
(74) Vertreter: Luchs, Willi

(56) Entgegenhaltungen:
- EP-A- 0 042 448
- EP-A- 0 050 541
- EP-A- 0 345 833
- WO-A-85/05528
- DE-A- 3 006 121
- DE-A- 3 222 542
- FR-A- 2 501 490

## Beschreibung

Die Erfindung betrifft einen heizbaren Milchbehälte*r nach dem Oberbegriff des Anspruchs 1.*

Bei einem Behälter für die Erhitzung von Milch, der unter dem Namen "Bain Marie" bekannt ist, sind ein Wasser enthaltendes Gefäss und ein in dieses stellbarer Milchbehälter vorgesehen, bei dem die Milch durch Aufheizen des Wassers beispielsweise mittels eines in letzteren eingetauchten Heizstabes erfolgt. Diese Art von Milcherhitzung ist mit verschiedenen Nachteilen behaftet, so muss darauf geachtet werden, dass stets genügend Wasser in dem den Milchbehälter umschliessenden Wassergefäss enthalten ist. Zum einen darf nicht zu viel Wasser eingefüllt werden, ansonsten es beim Hineinstellen des Milchbehälters überlaufen würde und zum andern wenn zu wenig Wasser eingefüllt ist, wird die Milch nur ungenügend erwärmt. Zudem wird mit dieser Milchbehälter-Anordnung zuerst das Wasser und erst in der Folge die Milch erhitzt. Dies führt zu einem Mehraufwand an Energieverbrauch. Es besteht überdies die Gefahr, dass die Milch überhitzt wird und dadurch eine Eiweissgerinnung eintritt und sich an deren Oberfläche schnell eine unerwünschte rahmartige Schicht bildet.

*Bei einem bekannten heizbaren Milchbehälter nach der Druckschrift EP-A-0 050 541 bzw. DE-A-32 22 542 ist eine den Behälter umgebende Heizeinrichtung zum Erhitzen von darin eingefüllter Milch vorgesehen. Die Heizeinrichtung hat ein partiell die Behälterwandung flächenartig umgebendes, elektrisch heizbares Widerstandselement, einen auf der Unterseite des Behälters positionierten Messfühler und eine mit diesen verbundene Steuerungseinrichtung für ein gezieltes Erhitzen und Warmhalten der Milch. Bei diesem Milchbehälter ergibt sich eine relativ umständliche Reinigung, nachdem die in diesem eingefüllte und erhitzte Milch entleert ist.*

*Die Druckschrift EP-A-0 042 448 beschreibt einen Flächenheizleiter aus einem elektrisch leitfähigen Silikongummi und in diesem enthaltende Glasfasergewebe. Solche Flächenheizleiter werden dabei für Wärmedecken oder Heizkissen verwendet.*

*Im weiteren ist es nach der Druckschrift FR-A-2 501 490 bekannt, einen Behälter mittels diesen flächenartig umgebende, elektrisch heizbare Widerstandselementen aufzuheizen. Der Behälter kann dabei aus einer diesen aufnehmenden Vorrichtung herausgenommen werden. Nachteilig bei dieser Vorrichtung ist der Umstand, dass die Widerstandselemente nach dem Herausnehmen des Behälters von aussen zugänglich sind und daher leicht beschädigt werden können.*

Demgegenüber liegt der vorliegenden Erfindung die Aufgabe zugrunde, einen Milchbehälter mit einer Heizeinrichtung zu versehen, mittels der eine schnelle und verbesserte Erhitzung und Wärmehaltung der Milch erreicht wird, der dabei einfach und günstig herstellbar ist, *und zudem diese die Milch fassende Innenwandung des Behälters ohne grossen Aufwand in einen sauberen Zustand gebracht werden kann.*

Die Aufgabe ist erfindungsgemäss *durch das Kennzeichen des Anspruchs 1 gelöst.*

Vorzugsweise sind zwei unabhängig voneinander ansteuerbare Widerstandselemente vorgesehen, von denen das eine den Behälterboden insgesamt abdeckt, während das andere den Behältermantel über dessen gesamte Höhe umgibt. Mit dieser erfindungsgemässen Heizeinrichtung erfolgt zum einen das Erhitzen und Warmhalten der Milch mit weniger Energieaufwand aufgrund der verbesserten Wärmeübertragung und zum anderen lässt sich eine genaue Steuerung der Heiztemperatur auf sehr einfache Weise erzielen, womit ein Überhitzen der Milch in jeder Heizphase absolut vermieden wird.

Ausführungsbeispiele der Erfindung sowie weitere Vorteile derselben sind nachfolgend anhand der Zeichnung näher erläutert. Es zeigt:
- Fig.1: einen Längsschnitt durch ein teilweise dargestelltes Gerät mit einem heizbaren Behälter, und
- Fig.2 Fig.3: einen teilweise dargestellten Querschnitt des Behälters gemäß der Erfindung.

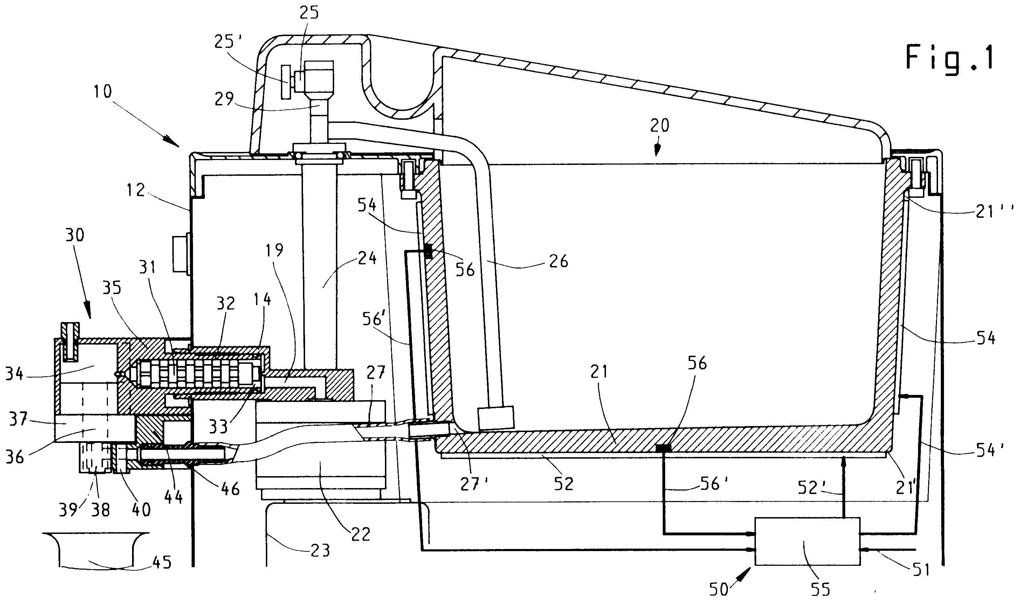

Fig. 1 zeigt ein teilweise dargestelltes Gerät 10, von dem im wesentlichen sein Gehäuse 12, ein in diesem angeordneter Milchbehälter 20, eine von diesem ausgehende Leitung 26, eine Pumpe 22, ein mit diesem gekoppelter Motor 23 und ein Auslasskopf 30 ersichtlich ist. Unter letzterem ist ein nicht näher gezeigter Abstellsockel für eine Tasse oder dergleichen angeordnet. Dieses Gerät 10 kann bspw. als Kaffemaschine ausgebildet sein oder es kann sich um ein Zusatzgerät für eine Kaffeemaschine oder um ein autonomes Gerät handeln, aus dem zum Beispiel heisse Milch, Milchschaum und heisses Wasser entnehmbar sind.

Für die Erzeugung der heissen Milch dient der erfindungsgemässe Milchbehälter 20, der von einer ihm zugehörigen Heizeinrichtung 50 aufheizbar ist. Diese Heizeinrichtung 50 umfasst zumindest ein partiell die Behälterwandung (sei es der Boden oder der Mantel) flächenartig umgebendes, elektrisch heizbares Widerstandselement 52, 54, eine oder mehrere in der Behälterwandung positionierte Messfühler 56 und eine mit diesen verbundene Steuerung 55 für das Erhitzen und Warmhalten der Milch. Im Konkreten sind zwei unabhängig voneinander ansteuerbare Widerstandselemente 52, 54 vorgesehen, von denen das eine den Behälterboden 21' nahezu insgesamt abdeckt während das andere den Behältermantel 21'' annähernd über dessen gesamte Höhe umgibt. Solche Widerstandselemente 52, 54 sind an sich bekannt; sie werden bspw. von der Firma Electrolux unter dem Namen "Electrolux-SIL-Heizelemente" vertrieben. Diese sind zweckmässigerweise an die Behälterwandung aufvulkanisiert und bestehen insbesondere aus silikonbeschichtetem Glasfasergewebe sowie darin eingebetteten bifilaren Heizwicklungen. Der Behälter 21 ist dabei vorzugsweise aus Aluminium mit einer Wanddicke von ca. 15 Millimetern gefertigt und überdies ist er innen beschichtet, um ein Anbacken oder Ankleben der darin befindlichen Milch weitgehend zu vermeiden. Die Innenbeschichtung des Behälters 21 ist zum Beispiel aus einer Antihaftbeschichtung oder ähnlichem ausgeführt.

Die Steuerung 55 wird bei Betätigung eines Hauptschalters des Gerätes 10 oder über einen separaten Schalter mit einer angedeuteten Spannungsquelle 51 versorgt und bewirkt sodann die Behälteraufheizung, indem die Widerstandselemente 52, 54 von ihr über je eine Kabelverbindung 52', 54' unabhängig voneinander mit einer eine stets gleiche Anfangsheizleistung erzeugenden Wechselspannung versehen werden. Die Messfühler 56 in dem Behälterboden 21' resp. in dem Behältermantel 21'' liefern in der Folge der Steuerung 55 je ein Rückführsignal 56' der momentanen Isttemparatur. Sobald beim anfänglichen Aufheizen eine bestimmte Temparatur im Behälterboden 21' und/oder im Behältermantel 21'' erreicht ist, die unterhalb einer Maximaltemperatur zwischen 70 und 75 Celsius liegt, bspw. bei 60, wird die Heizleistung reduziert, indem bei der Wechselspannung Frequenzen herausgeschnitten werden. Die Steuerung 55 kann hierbei so ausgelegt sein, dass diese Heizleistung nach Erreichen der Temperatur von 60 stetig reduziert wird, bis die Endtemparatur von 72 Celsius erreicht ist, oder es kann auch eine stufenweise Reduktion vorgesehen sein. Diese Endtemperatur kann eingestellt werden und beträgt zwischen 70 und 75 Celsius. Sie steht in Abhängigkeit zu der Meereshöhe und anderen Einflussfaktoren. Damit wird mit Erfolg verhindert, dass die einstellbare Maximaltemparatur in der Behälterwandung und folglich in der Milch überschritten wird, denn wenn dies geschehen würde, könnte die Milch ihrerseits überhitzt werden, was unerwünschte Nebeneffekte ihrer Konsistenz bewirken würde, wie die Bildung eines Pelzes auf deren Oberfläche oder ein sogenanntes Caramelisieren oder leichtes Verbrennen.

Wenn nun der Behälter 21 zu Beginn des Aufheizens zweckmässigerweise annähernd mit Milch gefüllt ist, so wird letztere auf die obgenannte Temperatur aufgeheizt und dann von der Pumpe 22 mit dosierten Mengen abgesaugt. Es wird von der Steuerung 55 sichergestellt, dass die übrige Milch nicht abkühlt aber auch nicht überhitzt wird. Infolgedessen wird über die Messfühler 56 laufend die Isttemperatur in der Behälterwandung gemessen und bspw. nach einem Temperaturabfall von 2 bis 5 Celsius werden die Widerstandselemente 52, 54 wieder mit einer reduzierten Heizleistung angesteuert, bis sich die angestrebte Solltemparatur wieder einstellt. Mit dieser Steuerung 55 wird somit ein einfacher Regelungsvorgang bewirkt, sie ist jedoch sehr einfach ausgeführt und daher sehr kostengünstig herstellbar. Selbstverständlich könnte anstelle von ihr auch ein leistungsfähiger Regler vorgesehen sein.

An das Gerät 10 ist ein Auslasskopf 30 aufgesteckt, in dem inbesondere zum Herauslassen von Milchschaum eine Kammer 34 und eine aus dieser annähernd senkrecht nach unten führenden Auslassöffnung 36 ausgebildet ist und drei zusätzliche, voneinander unabhängige Auslassöffnungen 40 vorgesehen sein können, die zusammen mit der aus der Kammer führenden Auslassöffnung 36 innerhalb eines Durchmessers eines darunter stellbaren, vorzugsweise als Tasse 45 ausgebildeten Gefässes angeordnet sind. Diese drei zusätzlichen, annähernd senkrecht nach unten gerichteten Auslassöffnungen 40 sind zu der aus der Kammer führenden Auslassöffnung 36 annähernd in gleichem Abstand und in einem Winkel von 90° zueinander angeordnet. Damit wird bewirkt, dass eine unter diesen Auslasskopf 30 gestellte Tasse 45 von jeder Auslassöffnung 36, 40 mit einem jeweiligen Getränk gespeist werden kann, ohne dass die Tasse verschoben werden muss. Der Auslasskopf 30 umfasst dabei zweckmässigerweise einen Gehäusekopf 35, ein mit der Auslassöffnung der Kammer 34 versehenen Deckel 37 und ein unter diesen befindlichem, mit den zusätzlichen Auslassöffnungen *38, 39,* 40 versehenen Gehäuseteil 44. Der Gehäusekopf 35 weist einen Steckteil 32 auf, welcher abichtend in eine entsprechend dimensionierte Steckdose 14 im Gehäuse 12 des Gerätes 10 bis zu einem Abschlag einschiebbar und darin gehalten ist. Ebenso ist der Gehäuseteil 44 in horizontal aus dem Gehäuse 12 hervorstehende Steckkörper 46 dicht draufgesteckt. Somit kann der Auslasskopf 30 insgesamt sehr einfach vom Gehäuse 12 weggenommen, gereinigt und durch das unabhängige Aufstecken seines Gehäuseteils 44 sowie nachfolgend seines Gehäusekopfes 35 wieder in den betriebsbereiten Zustand gebracht werden. Auch der Deckel 37 lässt sich nach dem Wegnehmen des Gehäusekopfes 35 leicht von diesem entfernen und wieder einstecken. Es versteht sich dabei von selbst, dass die einzelnen Teile dieses Auslasskopfes 30 des öfteren gereinigt werden müssen und daher ihre leichte Montierbarkeit durch blosses Aufstecken bzw. Ihre Demontierbarkeit durch Wegziehen ohne grossen Kraftaufwand sehr von Vorteil ist. Diese beschriebenen Steckverbindungen ermöglichen ein äusserst einfaches Handling; im Prinzip könnte der Gehäusekopf oder der Gehäuseteil auch über ein Befestigungselement, bspw. ein Bajonettverschluss oder ähnlichem, an das Gerätegehäuse befestigbar sein.

Ein weiteres besonderes Merkmal des Auslasskopfes 30 besteht darin, dass der Steckteil 32 des Gehäusekopfes 35 eine Einlassöffnung 33 bildet, in der ein Widerstandsdurchlasselement 31 annähernd spielfrei eingelegt ist, welches zum Erzeugen von Milchschaum dient. Ein solches Widerstandsdurchlasselement 31 ist an sich für die Erzeugung von Rahm bekannt. Es besteht aus einem vorteilhaft aus Kunststoff hergestellten stabförmigen Element und aus an dessen Umfang vorgesehenem lamellenartigen Aufbau, der einen Labyrinthdurchlass bildet, durch welchen Milch gepresst wird. Bei diesem lamellenartigen Aufbau sind am Umfang des stabförmigen Elementes ringförmige Lamellen mit ungleichmässig verteilten Aussparungen in gleichem Abstand zueinander eingearbeitet. Die obgenannte Einlassöffnung 33 führt mit einem Durchmesser von nur ein paar Millimetern annähernd tangential in die zylindrische Kammer 34. Eingangsseitig ist sie über ein Leitungsstück 19 mit der Pumpe 22 verbunden, die von dem im Gehäuse 12 befestigten Motor 23 angetrieben ist. Bei der Pumpe 22 handelt es sich um eine herkömmliche Zahnradpumpe, mittels der ein Druck von einigen bar erzeugt werden kann. Diese ist an eine Zuführleitung 24, 26 angeschlossen, die in den Grund des Milchbehälters 20 führt und von dort aus erhitzte Milch ansaugt. In diese Zuführleitung 24, 26 führt zusätzlich ein Luftanschluss 29, deren einführbare Menge mittels eines Drehknopfes 25' eines Luftmengenreglers 25 einstellbar ist. Die auf annähernd 70 Celcius erhitzte Milch wird wie erwähnt von der Pumpe 22 mit einem Luftanteil angesaugt und durch das Widerstandsdurchlasselement 31 tangential in die Kammer 34 des Auslasskopfes 30 eingespritzt. Durch dieses tangentiale Einblasen trennt sich die nach wie vor flüssige Milch von der verschäumten, denn diese hat durch die entstehende Zentrifugalkraft eine längere Verweilzeit in der Kammer als der Schaum. Zur Erzielung einer optimalen Schaumerzeugung kann durch Betätigen des genannten Drehknopfes 25' der Luftanteil eingestellt und je nachdem im Verhältnis mehr oder weniger Milchschaum entnommen werden.

Im weiteren führt von einem Ausgang 27' des Milchbehälters 20 eine Leitung 27 zu einem am Gehäuse 12 befestigten Steckkörper 46, an dem der Gehäuseteil 44 des Auslasskopfes 30 befestigt ist und mit dem die Auslassöffnung 40 kommuniziert. Damit kann heisse Milch über ein nicht näher gezeigtes Verschlusselement dosiert aus dieser Auslassöffnung 40 entnommen werden. Am Gehäuse 12 ist ferner ein Druckknopf angebracht, mittels dem bspw. durch kurzes Drücken eine bestimmte Menge heisse Milch in die Tasse 45 geleert werden kann. Es ist selbstverständlich für jede Auslassöffnung ein entsprechendes Betätigungsorgan (Druckknopf) für die Ansteuerung des daraus zu entnehmenden Getränkes vorgesehen, was aber nicht näher dargestellt ist.

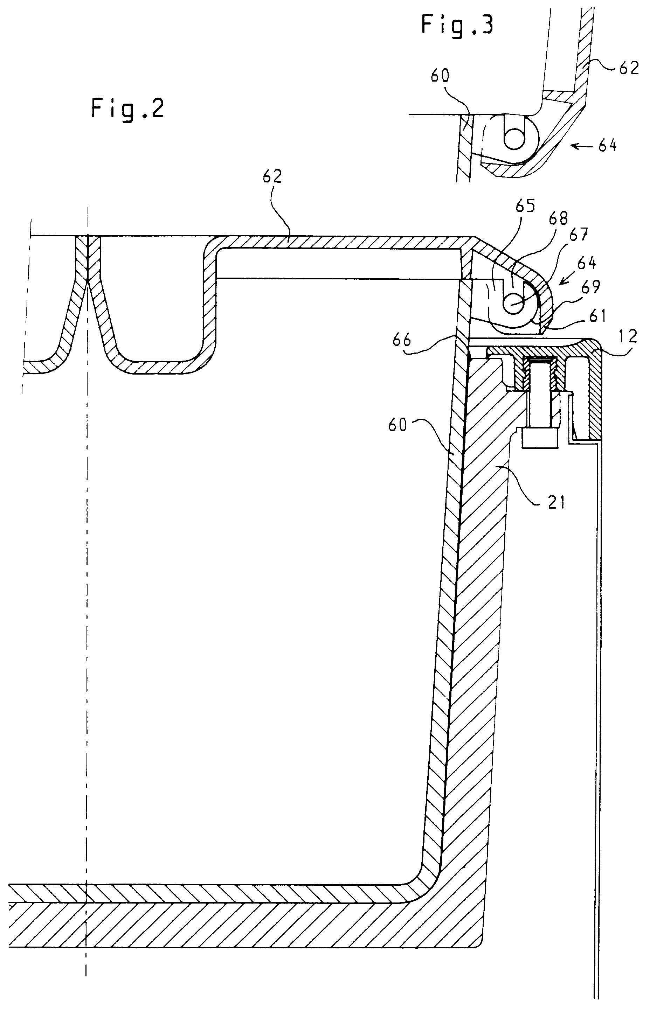

Fig.2 zeigt in einem teilweisen Querschnitt einen Behälter 21, der ein in diesen gestelltes und aus diesem herausnehmbares Gefäss 60 sowie einen letzteres oben schliessenden Deckel aufweist, welcher aus zwei von der Mitte des Gefässes 60 nach aussen aufschwenkbarer Deckelhälften 62 gebildet ist. Die Innenabmessungen des Behälters 21 und die Aussenabmessungen des Gefässes 60 sind annähernd gleich und das Gefäss 60 steht daher nach dem Hineinstellen in den Behälter 21 aussen vollumfänglich mit diesem in Berührung, wobei in den Spalt 66 zwischen dem Gefäss 60 und dem Behälter 21 ein flüssiges Medium, vorzugsweise Wasser, gefüllt ist, damit eine bestmögliche Wärmeleitung erzielt ist. Die Deckelhälften 62 sind nebeneinander angeordnet und je an einer Längsseite des Gefässes 60 mittels je eines Scharniers 64 schwenkbar gehalten. Dieses Scharnier 64 weist einen oder mehrere am Gefäss 60 befestigte Bügel 65 mit je einer Ausnehmung 68 sowie mit einer äusseren Rundung 69, einen in der jeweiligen Deckelhälfte 62 angeordneten, in der Ausnehmung 68 zentrierbaren, horizontal ausgerichteten Bolzen 67 und einen von der Deckelhälfte 62 gebildeten lappenförmigen Rand 61 auf. Letzterer umgreift die Rundung 69 des Bügels 65 derart, dass die Deckelhälfte 62 beim Aufschwenken formschlüssig mit dem Gefäss 60 verbunden ist. Der lappenförmige Rand 61 hat auf seiner Innenseite einen mit der Rundung 69 des Bügels 65 deckungsgleichen Radius und weist eine von letzterem in eine vertikale parallel zu der nach oben hin offenen Ausnehmung 68 übergehende Gerade auf. Infolgedessen können die Deckelhälften 62 in der zugeklappten Stellung annähernd senkrecht nach oben vom Gefäss 60 abgehoben werden. Das Gefäss 60 ragt oben über den Behälter 21 hinaus und die Bügel 65, von denen pro Deckelhälfte 62 deren zwei vorgesehen sind, sind oberhalb des Behälters 21 angeordnet. Das Gefäss 60 kann daher sehr einfach aus dem Behälter 21 herausgenommen und gereinigt werden. Dies geschieht vorteilhaft so, dass die Deckelhälften 62 aufgetan und dann das Gefäss 60 aus dem Behälter 21 herausgehoben werden kann.

Fig.3 zeigt die eine Deckelhälfte 62 in geöffnetem Zustand. Es ist dabei deutlich deren förmschlüssige Verbindung mit dem Bügel 65 erkennbar.

Mit diesem Gerät und dem darin integrierten erfindungsgemässen heizbaren Milchbehälter ist beispielsweise für den Gastronomiebereich ein ganz neuartiges, äusserst bedienerfreundliches und sehr hygienisches System zur Erzeugung von Milchschaum, heisser Milch oder von Schockoladegetränken geschaffen worden.

## Patentansprüche

1. Heizbarer Milchbehälter, mit einer den Behälter umgebenden Heizeinrichtung zum Erhitzen von darin eingefüllter Milch oder einem Milchgemisch, die Heizeinrichtung (50) zumindest ein partiell die Behälterwandung flächenartig umgebendes, elektrisch heizbares Widerstandselement (52,54), einen oder mehrere in der Behälterwandung positionierte Messfühler (56) und eine mit diesen verbundene Steuerung (55) für ein gezieltes Erhitzen und Warmhalten der Milch aufweist, dadurch gekennzeichnet, dass
*der Behälter (21) ein in diesen gestelltes und aus diesem herausnehmbares Gefäss (60) aufweist,*
*dass die Innenabmessungen des Behälters (21) und die Aussenabmessungen des Gefässes (60) annähernd gleich sind und daher das Gefäss (60) nach dem Hineinstellen in den Behälter (21) aussen vollumfänglich mit diesem in Berührung steht, wobei in den Spalt (66) zwischen dem Gefäss (60) und dem Behälter (21) ein flüssiges Medium, vorzugsweise Wasser, einfüllbar ist.*

2. Heizbarer Milchbehälter nach Anspruch 1, dadurch gekennzeichnet, dass zwei unabhängig voneinander ansteuerbare Widerstandselemente (52,54) vorgesehen sind, von denen das eine den Behälterboden (21') insgesamt abdeckt während das andere den Behältermantel (21'') über dessen gesamte Höhe umgibt.

3. Heizbarer Milchbehälter nach einem der Ansprüche 1 oder 2, dadurch gekennzeichnet, dass das jeweilige Widerstandselement (52,54) von der Steuerung (55) derart geregelt ist, dass die Behälterwandung und damit die Milch beim Aufheizen eine einstellbare Maximaltemperatur zwischen 70° und 75° Celsius nicht überschreitet und bei Erreichen einer Wandtemperatur zwischen 50° und 70° Celsius die Heizleistung reduziert wird.

4. Heizbarer Milchbehälter nach einem der vorhergehenden Ansprüche, dadurch gekennzeichnet, dass der Behälter (21) aus Aluminium mit einer Wanddicke zwischen 10 und 20 Millimetern und das jeweilige an die Behälterwandung befestigte Widerstandselement (52,54) aus silikonbeschichtetem Glasfasergewebe und darin eingebetteten bifilaren Heizwicklungen besteht.

5. Heizbarer Milchbehälter nach Anspruch 4, dadurch gekennzeichnet, dass der aus Aluminium gefertigte Behälter (21) innen zwecks Vermeidung von Anbacken oder Ankleben von Milch beschichtet ist.

6. Heizbarer Milchbehälter nach einem der vorhergehenden Ansprüche, dadurch gekennzeichnet, dass die Heizeinrichtung (50) und der Behälter (21) in einem Gerät (10) integriert sind, und dass aus dem Behälter (21) ein Ausgang (27') zum Auslassen der heissen Milch und eine separate, zu einer Pumpe (22) und einen Auslass (36) führende Leitung (26) führt, in welche überdies ein Luftgemisch zugeführt wird, wodurch Milchschaum für Cappuccino-Kaffee erzeugt werden kann.

7. Heizbarer Milchbehälter nach Anspruch *1*, dadurch gekennzeichnet, dass das Gefäss (60) mit einem zweiteiligen Deckel verschliessbar ist, dessen Deckelhälften (62) nebeneinander angeordnet sind und seitlich am Gefäss (60) schwenkbar gehalten sind, ausser in der zugeklappten Stellung, bei der sie annähernd senkrecht vom Gefäss (60) wegnehmbar sind.

8. Heizbarer Milchbehälter nach Anspruch *7*, dadurch gekennzeichnet, dass die beiden Deckelhälften (62) je an einem seitlich am Gefäss (60) angeordneten Scharnier (64) gehalten sind, wobei dieses Scharnier (64) aus einem am Gefäss (60) befestigten Bügel (65) mit einer Ausnehmung (68) sowie mit einer äusseren Rundung (69), einem in der jeweiligen Deckelhälfte (62) angeordneten, in der Ausnehmung (68) zentrierbaren Bolzen (67) sowie aus einem von der Deckelhälfte (62) gebildeten lappenförmigen Rand (61), welcher die Rundung (69) des Bügels (65) derart umgreift, dass die jeweilige Deckelhälfte (62) beim Aufschwenken formschlüssig mit dem Gefäss (60) verbunden ist.

## Claims

1. Heatable milk container, with a heating device, which envelops the container and whose purpose is to heat the milk filled into said container or a milk mixture, wherein the heating device (50) exhibits at least one electrically heatable resistance element (52, 54), which partially envelops in a flat manner the container wall; one or several sensor(s) (56) positioned in the container walls; and a controller (55), which is connected to said sensors for controlled heating of the milk and keeping it warm,
characterized in that
the container (21) having a vessel (60), which is placed into said container an can be removed from said container, that the inner dimensions of the container (21) and the outer dimensions of the vessel are approximately the same; and, therefore, after placing the vessel (60) into the container (21), the entire outer circumference of the vessel (60) makes contact with said container, whereby a liquid medium, preferably water, can be filled into the gap (66) between the vessel (60) and the container (21).

2. Heatable milk container as claimed in claim 1, wherein there are two resistance elements (52, 54), which can be driven independently of each other and of which the one covers the entire container bottom (21'), whereas the other envelops the container shell (21'') over its entire height.

3. Heatable milk container as claimed in claim 1 or 2, wherein the respective resistance element (52, 54) is controlled in such a manner by the controller (55), that the container wall and thus the milk, upon heating, does not exceed an adjustable maximum temperature ranging from 70° to 75° Celsius; and upon reaching a wall temperature ranging from 50° to 70° Celsius, the heating power is reduced.

4. Heatable milk container as claimed in anyone of the preceding claims, wherein the container (21) is made of aluminium with a wall thickness ranging between 10 and 20 millimeters the resistance elements (52, 54), which are attached to the container walls, are made of silicone-coated glass fiber fabric and bifilar filament windings embedded in said glass fiber fabric.

5. Heatable milk container as claimed in claim 4, wherein the aluminium container (21) is coated internally for the purpose of preventing the milk from baking on or sticking to said interior.

6. Heatable milk container as claimed in anyone of the preceding claims, wherein the heating device (50) and the container (21) are integrated into one device (10); and wherein an exit (27') leads out of the container (21) in order to drain hot milk; and a separate pipe (26), which leads to a pump (22) and an outlet (36), leads out of the said container; and wherein, moreover, an air mixture is fed into said pipe, with the result that milk foam for cappuccino coffee can be produced.

7. Heatable milk container as claimed in claim 1, wherein the vessel (60) can be closed with a two-part cover, whose cover halves (62) are arranged side-by-side and are pivotally mounted on the side of the vessel (60), except in the closed position, in which they can be removed from the vessel (60) approximately vertically.

8. Heatable milk container as claimed in claim 7, wherein each of the two cover halves (62) is mounted on a hinge (64) attached to the side of the vessel (60), whereby this hinge (64) exhibits a bracket (65), which is attached to the vessel (60), with a recess (68) and an external rounding (69), a bolt (67), which can be centred in the recess (68) and is arranged in the respective cover half (62), and a flap-shaped edge (61), which is formed by the cover half (62) and which envelops the rounding (69) of the bracket (65) such as when the cover half is opened, the respective cover half (62) is connected to the vessel (60) in a shape-locking manner.

## Revendications

1. Réservoir de lait chauffant, comprenant un dispositif de chauffage entourant le réservoir et servant à chauffer du lait ou un mélange de lait remplissant ce réservoir, le dispositif de chauffage (50) comprenant au moins un élément de résistance chauffante électrique (52, 54), entourant partielle-ment et à plat la paroi de réservoir, une ou plusieurs sondes de mesure (56) disposées dans la paroi de réservoir, et une commande (55) reliée à ces sondes de mesure et permettant de chauffer le lait et le maintenir chaud d'une manière voulue, caractérisé en ce que le réservoir (21) comporte une cuve (60) qui est placée dans ce réservoir et peut en être extraite et en ce que les dimensions intérieures du réservoir (21) et les dimensions extérieures de la cuve (60) sont approximativement égales et que donc, une fois introduite dans le réservoir (21), la cuve (60) est extérieurement totalement en contact avec ce réservoir, tandis qu'il est possible de remplir d'un milieu liquide, de préférence d'eau, l'intervalle (66) existant entre la cuve (60) et le réservoir (21)

2. Réservoir de lait chauffant suivant la revendication 1, caractérisé en ce qu'il est prévu deux éléments de résistance (52, 54) pouvant être commandés indépendamment l'un de-l'autre et dont l'un couvre entièrement le fond de réservoir (21'), tandis que l'autre entoure la paroi cylindrique de réservoir (21'') sur toute la hauteur de cette paroi.

3. Réservoir de lait chauffant suivant l'une des revendications 1 ou 2, caractérisé en ce que chaque élément de résistance (52, 54) est régulé par la commande (55) d'une façon telle que, lors du chauffage, la paroi de réservoir et donc le lait ne dépassent pas une température maximale réglable comprise entre 70°C et 75°C et que, lorsqu'une température de paroi comprise entre 50°C et 70°C est atteinte, la puissance de chauffage est réduite.

4. Réservoir de lait chauffant suivant l'une des revendications précédentes, caractérisée en ce que le réservoir (21) est en aluminium avec une épaisseur de paroi comprise entre 10 et 20 millimètres et chaque élément de résistance (52, 54) fixé sur la paroi de réservoir est constitué d'un tissu de fibre de verre enduit de silicone et d'enroulements chauffants bifilaires noyés dans ce tissu.

5. Réservoir de lait chauffant suivant la revendication 4, caractérisé en ce que le réservoir (21) réalisé en aluminium est revêtu intérieurement afin d'éviter que le lait ne brûle à sa surface ou n'attache sur lui.

6. Réservoir de lait chauffant suivant l'une des revendications précédentes, caractérisé en ce que le dispositif de chauffage (50) et le réservoir (21) sont intégrés dans un appareil (10) et en ce qu'une sortie (27') permet la sortie du lait chaud hors du réservoir (21) et une tubulure (26) séparée mène à une pompe (22) et un soutirage (36), un mélange d'air étant en outre envoyé dans cette tubulure (26), ce qui permet de préparer une mousse de lait pour un café cappuccino.

7. Réservoir de lait chauffant suivant la revendication 1, caractérisé en ce que la cuve (60) peut être fermée au moyen d'un couvercle en deux parties dont les moitiés de couvercle (62) sont disposées l'une à côté de l'autre et sont maintenues latéralement sur la cuve (60) d'une manière basculante, à l'exception de la position fermée par rabattement dans laquelle elles sont extractibles de la cuve (60) d'une manière approximativement perpendiculaire.

8. Réservoir de lait chauffant suivant la revendication 7, caractérisé en ce que chacune des deux moitiés de couvercle (62) est maintenue sur une charnière (64) associée disposée latéralement sur la cuve (60), cette charnière (64) étant constituée d'un étrier (65), fixé sur la cuve (60) et comportant un évidement (68) et une partie arrondie extérieure (69), d'un axe (67), disposé dans la moitié de couvercle (62) associée et pouvant être centré dans l'évidement (68), et d'un rebord (61) en forme de patte qui est formé par la moitié de couvercle (62) et qui entoure la partie arrondie (69) de l'étrier (65) d'une façon telle que, lorsqu'on l'ouvre en la faisant basculer, la moitié de couvercle (62) associée est rendue solidaire de la cuve (60) par complémentarité de formes.
